# NEUE EUROPÄISCHE PATENTSCHRIFT

(11) **EP 1 394 003 B2**
(45) Veröffentlichungstag und Bekanntmachung des Hinweises auf die Entscheidung über den Einspruch: **27.02.2013**
(45) Hinweis auf die Patenterteilung: 18.02.2009
(21) Anmeldenummer: 03018943.5
(22) Anmeldetag: 20.08.2003
(51) Int. Cl.: B60R 22/26, A63G 7/00, B60R 21/02

(54) **Haltesystem**
Restraining system
Dispositif de retenue

(30) Priorität: 29.08.2002 DE 10239891
(43) Veröffentlichungstag der Anmeldung: 03.03.2004
(73) Patentinhaber: Maurer Söhne GmbH & Co. KG, 80807 München (DE)
(72) Erfinder: Müller, Alfred, Dr., 82194 Gröbenzell (DE); Gettert, Robert, 82256 Fürstenfeldbruck (DE)
(74) Vertreter: GROSSE SCHUMACHER KNAUER VON HIRSCHHAUSEN

(56) Entgegenhaltungen:
- EP-A- 0 875 423
- EP-A- 1 245 459
- WO-A-99/22830
- WO-A1-2002/024494
- GB-A- 1 189 985
- GB-A- 1 245 452
- US-A- 3 453 026
- US-A- 3 637 259
- US-A- 5 476 309

## Beschreibung

Die Erfindung betrifft ein Fahrgeschäft-Rückhaltesystem für Personen, die dynamischen Bewegungen ausgesetzt sind, wie Beschleunigungs-, Verzögerungs- und/oder Schwenk- und Rotationsbewegungen von Beförderungsmitteln, insbesondere Fahrzeugen, umfassend einen Sitz zur Aufnahme einer Person, mit einer Sitzfläche und einer Rückenlehne sowie einer Haltevorrichtung mit mindestens einem zwischen mindestens einer Einstiegsstellung und mindestens einer Haltestellung bewegbaren Schließteil. Dabei sind die Personen dynamischen Kräften ausgesetzt und müssen gegen das Heraus- oder Herunterfallen gesichert werden.

Schienengebundene Fahrzeuge finden z.B. auf Jahrmärkten, Volksfesten und dgl. in vielfältigen Fahrgeschäften zur Belustigung der Besucher Anwendung. Bei diesen Fahrgeschäften, wie z.B. Achterbahnen, Karussells und dgl. werden rasante Bewegungen durchgeführt, wobei durch die Beschleunigung und Abbremsung sowie den entsprechenden Richtungsänderungen die Körper der Fahrgäste unerwarteten Belastungen ausgesetzt werden, was einerseits den Fahrspaß erhöht, aber andererseits auch die Gefahr von Unfällen in sich birgt, z. B. durch Herausfallen der Fahrgäste aus dem Fahrgeschäft.

Aus diesem Grunde ist es bekannt, bei entsprechenden Fahrgeschäften mit hohen Geschwindigkeiten, starken Beschleunigungen und Verzögerungen entsprechende Rückhaltesysteme vorzusehen. Diese Fahrgeschäft-Rückhaltesysteme müssen einer Vielzahl von Anforderungen genügen, die zum Teil widersprechend sind. So sollen sie einerseits eine erhöhte Sicherheit garantieren, andererseits aber einfach und schnell bedienbar sein. Außerdem sollen sie einerseits den Fahrgästen ausreichend Bewegungsfreiheit gewähren, aber andererseits verhindern, dass selbst Bewusstlose oder Personen in selbstmörderischer Absicht aus dem Fahrzeug gelangen können. Aus diesem Grund sind trotz der bekannten Rückhaltesysteme Verbesserungen an den Rückhaltesystemen erforderlich.

Ein bekanntes Fahrgeschäft-Rückhaltesystem ist zum Beispiel in der gattungsbildenden WO 99/22830 A1 offenbart. Das dort beschriebene Rückhaltesystem verfolgt einen Ansatz bei dem die Passagiere in relativ gestreckter Position durch wenigstens zwei verschiedene Rückhaltekomponenten so gehalten werden, dass sich die Oberkörper und die Beine möglichst wenig bewegen können. Somit ist die Bewegungsfreiheit gerade der Beine und Oberkörper stark eingeschränkt und vermittelt den Passagieren das Gefühl gefesselt zu sein. Zudem erfordert die große Zahl der pro Sitz anzulegenden Rückhaltekomponenten einen großen Bedienungsaufwand für das Bedienungspersonal bei der Überprüfung auf sicheren Sitz.

Es ist deshalb Aufgabe der vorliegenden Erfindung, ein Fahrgeschäft-Rückhaltesystem zu schaffen, das einfach aufgebaut ist, schnell und sicher zu bedienen ist und zugleich eine optimale Sicherheit bei ausreichender und möglichst großer Bewegungsfreiheit der Fahrgäste bietet. Außerdem soll die Sicherheit der Fahrgäste durch das Bedienungspersonal einfach und rationell überprüft werden können.

Diese Aufgabe wird gelöst durch ein Fahrgeschäft-Rückhaltesystem mit den Merkmalen des Anspruchs 1. Vorteilhafte Ausgestaltungen sind Gegenstand der abhängigen Ansprüche.

Das erfindungsgemäße Fahrgeschäft-Rückhaltesystem zeichnet sich nach einem ersten Aspekt dadurch aus, dass es im wesentlichen auf eine Haltevorrichtung im Beckenbereich der zu sichernden Person beschränkt werden kann. Obwohl natürlich Haltevorrichtungen im Beckenbereich einer zu sichernden Person bereits bekannt sind, haben umfangreiche Untersuchungen der Erfinder gezeigt, dass es wesentlich darauf ankommt, dass ein im wesentlichen U-förmiges Halteteil vorgesehen ist, welches die zu sichernde Person im überwiegenden Teil des Beckenbereichs umschließt und wobei dieses U-förmige Halteteil in einer Halteebene angeordnet ist, die anthropometrisch optimiert ist. Dabei hat sich herausgestellt, dass die anthropometrisch-optimierte Halteebene bei einem zum Ein- und Ausstieg bereit gestellten Fahrzeug ( - Winkelangaben beziehen sich im folgenden immer auf zum Ein- und Ausstieg bereit gestellte Fahrzeuge - ) in einem Winkel von 30° - 60°, insbesondere 40° - 50°, vorzugsweise ca. 45° oder 50°, höchst vorzugsweise 44,6° zur Horizontalen geneigt ist, wobei die Sitzfläche von 0° bis 30°, vorzugsweise 25° zur Horizontalen geneigten sein kann, so dass sich für die Sitzfläche eine andere Neigung zur anthropometrischen Ebene von 20° bis 25° ergibt. Bei der Bestimmung der anthropometrisch günstigen Ebene muß jedoch immer auf den Einzelfall des Fahrgeschäfts abgestellt werden, da insbesondere die Art der Bewegungen, die Anordnung der Sitze sowie die Anordnung von Rückenlehne mit vorzugsweise einer Neigung von 70° bis 75°, insbesondere 85° zur Sitzfläche usw. eine Rolle spielen. Die optimale anthropometrische Halteebene von 45° bis 50°, insbesondere 44,6° zur Horizontalen ist jedenfalls dann zu wählen, wenn die Sitzfläche ebenfalls horizontal ausgerichtet ist. Ist die Sitzfläche geneigt zur Horizontalen angeordnet, kann eine Ausrichtung der Halteebene auf die Sitzfläche, also eine zusätzliche positive oder negative Neigung zur Horizontalen angezeigt sein. Da bei Fahrgeschäften üblicherweise jedoch die Fahrgäste sich in unterschiedlichster Ausrichtung bewegen, z. B. Überschläge und dergleichen, ist eine Ausrichtung der anthropometrischen Halteebene zur Horizontalen bevorzugt. Ein entsprechend der optimalen anthropometrischen Ebene angeordnetes, im wesentlichen U-förmiges Halteteil führt vorteilhafter Weise dazu, dass im Notfall das gesamte Gewicht der zu sichernden Person in einem unproblematischen Bereich des Körpers abgefangen werden kann und dass sämtliche möglichen Richtungen, mit der sich die Person aus dem Sitz entfernen könnte, optimal abgesichert sind. Außerdem behindern in der beschriebenen Halteebene weder besonders dicke Oberschenkel noch Bäuche den Schließ- und Haltevorgang.

Da die Haltevorrichtung zum Einstieg der Person bzw. zum Platznehmen der Person auf dem Sitz geöffnet werden muss, muss mindestens ein Schließteil vorgesehen sein, so dass die Haltevorrichtung eine Einstiegsstellung und eine Haltestellung einnehmen kann. In der vorliegenden Beschreibung ist deshalb unter Schließteil der Teil der Haltevorrichtung zu verstehen, der zum Einstieg der Person bewegt werden kann. Das Halteteil ist demgegenüber gemäß der Definition, die im Folgenden Verwendung finden soll, derjenige Teil der Haltevorrichtung, der im Notfall zum Halten der Person, also zum Aufnehmen der Kräfte, beiträgt. Da sowohl Halteteil als auch Schließteil mehrteilig aufgebaut sein können und unter Umständen ganz identisch sind oder identische Teile umfassen, ist die Unterscheidung zwischen Halteteil und Schließteil bei der Haltevorrichtung des erfindungsgemäßen Rückhaltesystems nach der obigen Definition zu beurteilen. Selbstverständlich können neben dem im wesentlichen U-förmigen Halteteil im Beckenbereich auch zusätzliche weitere Halteteile vorgesehen werden, wenn bspw. weitere Teile des Körpers in einer bestimmten Position gesichert werden müssen, wie z.B. der Oberkörper durch Schulterbügel usw. Darüber hinaus ist auch festzustellen, dass die Form des Halteteils im Beckenbereich lediglich den Körper der zu sichernden Person weitgehend umschließen muss und hierfür alle geeigneten Formen annehmen kann, die jedoch weitestgehend einer U-Form gleichen.

Um die Haltevorrichtung in der Haltestellung zu halten, ist vorzugsweise ein Verriegelungssystem vorgesehen, welches insbesondere mehrere Verriegelungsstellungen ermöglicht, so dass je nach Art der zu sichernden Person mehrere Verriegelungsstellungen und somit Haltestellungen möglich sind. Vorzugsweise kann das Verriegelungssystem lediglich durch das Bedienungspersonal, insbesondere ferngesteuert geöffnet werden, während die unterschiedlichen Verriegelungspositionen durch den Benutzer selbst wie auch durch das Bedienpersonal eingestellt werden können.

Nach einem zweiten Aspekt zeichnet sich die Erfindung dadurch aus, dass die Haltevorrichtung, die im Bereich des Verbindungsbereichs von Sitzfläche und Rückenlehne, also im Beckenbereich vorgesehen ist, einen im wesentlichen U-förmigen Bügel aufweist, der so drehbar, verschiebbar oder in einer Kulisse entsprechend führbar angeordnet ist, dass unter-schiedliche Verriegelungspositionen möglich sind, wobei bei den unterschiedlichen Verriegelungspositionen sich der Abstand des Bügels vom Sitz bzw. die mögliche Sitzbreite ändert. Wird der Bügel also beim Schließen der Haltevorrichtung immer weiter in Richtung des Sitzes bewegt, so verringert sich nicht nur der Abstand zum Sitz, sondern auch die Sitz-breite. Dies führt dazu, dass unabhängig von der Gestalt des Fahrgastes immer eine optimale Sicherung gegeben ist, ohne dass der Fahrgast durch die Sicherung durchschlüpfen kann oder von dieser zu stark eingeengt wird.

Um jedoch eine geeignete Verriegelungsposition für das erfindungsgemäß vorgesehene U-förmige Halteteil in der anthropometrischen Halteebene zu finden, ist nach einem weiteren Aspekt, für den auch unabhängig Schutz beansprucht wird, ein Meßsystem vorgesehen, welches zur Ermittlung der erforderlichen Schließstellung dient. Das Meßsystem umfasst gemäß der Erfindung ein zwischen den Enden des U-förmigen Halteteils angeordnetes band- oder seilartiges Element, welches sich beim Schließen der Haltevorrichtung an die zu sichernde Person anlegt und wobei durch die Ausbauchung des band- oder seilartigen Elements die erforderliche Schließstellung bestimmbar ist. Vorzugsweise wird dies dadurch ermittelt, dass aufgrund der Auszugslänge eines bspw. sich selbst aufwickelnden Gurts oder der Dehnung oder der Zugkraft eines elastischen oder in sonstiger Weise beweglichen Bandes, Seiles oder dgl. für die Bestimmung der Schließstellung herangezogen wird. Je länger nämlich der sich selbst aufwickelnde Gurt herausgezogen wird oder je weiter ein elastisches Element gedehnt wird, desto dicker ist die zu sichernde Person und desto weniger weit muss das U-förmige Halteteil in die Verriegelung einrasten, um die optimale Haltestellung zu erreichen. Umgekehrt wird bei einer geringen Ausbauchung des sich selbst aufwickelnden Gurtes bzw. eines entsprechenden elastischen Elementes die optimale Verriegelungsposition erst dann erreicht, wenn das U-förmige Halteteil weit in die Verriegelung einrastet und somit den Abstand zwischen Halteteil und Sitz entsprechend verringert wird.

Das Halteteil bzw. Schließteil kann in unterschiedlichsten Formen und Kombinationen aus starren und flexiblen Elementen, wie z.B. Bändern, Gurten usw. gestaltet sein, sofern ein gemäß der obigen Definition im wesentlichen U-förmiges Halteteil um den Beckenbereich in der optimalen anthropometrischen Ebene gegeben ist.

Bspw. kann das Schließteil durch einen verschwenkbaren, U-förmigen, starren Bügel gebildet sein, der zusammen mit der Verriegelung das U-förmige Halteteil bildet. Andererseits kann das Schließteil auch durch einen Ring gebildet werden, der der zu sichernden Person im Gürtelbereich angelegt wird und der dann ebenfalls mit einer Verriegelung und dem vorderen Teil des Rings das U-förmige Halteteil in der anthropometrischen Ebene bildet. Ferner sind Haltevorrichtungen vorstellbar, bei denen das Schließteil durch einen oder mehrere Rahmen gebildet wird, an denen bspw. entsprechendes Gurtzeug angeordnet ist, so dass sich die Gurte beim Schließen an die zu sichernde Person anlegen und zumindest ein Teil des Gurtzeugs wiederum das U-förmige Halteteil in der anthropometrischen Ebene bildet.

Gemäß den geschilderten Ausführungsformen können die verschiedenen Haltevorrichtungen mit unterschiedlichen Drehgelenken, Schwenkarmen, Schiebekulissen, Verriegelungssystemen und dgl. ausgebildet sein. Hierbei ist zu bemerken, dass es sich besonders bewährt hat, wenn der Sitz mit der Haltevorrichtung eine Einheit bildet, so dass der Sitz mit der Haltevorrichtung unabhängig von umgebenden Bauteilen, wie z.B. der Bodengruppe und dgl. angeordnet werden kann, so dass ein unabhängiges Rückhaltesystem gegeben ist. In diesem Zusammenhang hat es sich auch als vorteilhaft erwiesen, wenn die Kraftableitung bei Beanspruchung der Haltevorrichtung, also im Notfall, direkt am Sitz erfolgt und insbesondere beim Vorsehen von bspw. zwei Verriegelungseinheiten symmetrisch an den beiden Enden des U-förmigen Halteteils erfolgt.

Ferner hat es sich als vorteilhaft herausgestellt, wenn die unterschiedlichen Verriegelungsstellungen bzw. der Abstand des U-förmigen Halteteils zum Sitz mit der Länge der Sitzfläche und/oder der Rückenlehne abgestimmt ist, da dadurch vermieden werden kann, dass eine zu sichernde Person unter der Haltevorrichtung bzw. dem Halteteil hindurch rutscht. In diesem Zusammenhang hat es sich auch bewährt, die Sitzfläche und/oder die Rückenlehne den Körperkonturen anzupassen oder zumindest die Ränder der Sitzfläche und/oder Rückenlehne hochzuziehen, was eigentlich einer Verlängerung der Sitzfläche bzw. der Rückenlehne entspricht.

Weitere Merkmale, Vorteile und Einzelheiten der vorliegenden Erfindung werden aus der nachfolgenden detaillierten Beschreibung bevorzugter Ausführungsbeispiele anhand der beigefügten Zeichnungen deutlich. Dabei zeigen die Zeichnungen in rein schematischer Weise in
Fig. 1: eine Seitenansicht eines erfindungsgemäßen Rückhaltesystems;
Fig. 2: eine perspektivische Darstellung des Schließteils einer ersten Ausführungsform des erfindungsgemäßen Rückhaltesystems;
Fig. 3: eine Seitenansicht einer zweiten Ausführungsform:
Fig. 4: eine Seitenansicht der Ausführungsform gemäß Fig. 2;
Fig. 5: eine Seitenansicht einer dritten Ausführungsform;
Fig. 6: eine perspektivische Ansicht einer vierten Ausführungform;
Fig. 7: eine perspektivische Ansicht einer fünften Ausführungsform;
Fig. 8: eine perspektivische Ansicht einer sechsten Ausführungsform;
Fig. 9: eine perspektivische Ansicht einer siebten Ausführungsform;
Fig. 10: eine perspektivische Ansicht einer achten Ausführungsform;
Fig. 11: eine perspektivische Ansicht einer neunten Ausführungsform;
Fig. 12: (a):eine perspektivische Ansicht einer zehnten Ausführungsform mit einer Detailzeichnung in Fig. 12 (b),
Fig. 13: (a) und (b): eine perspektivische Verdeutlichung des erfindungsgemäßen Mess-Systems;
Fig. 14: eine Seitenansicht einer elften Ausführungsform die nicht zur Erfindung gehört; und
Fig. 15: eine perspektivische Ansicht einer zwölften Ausführungsform;

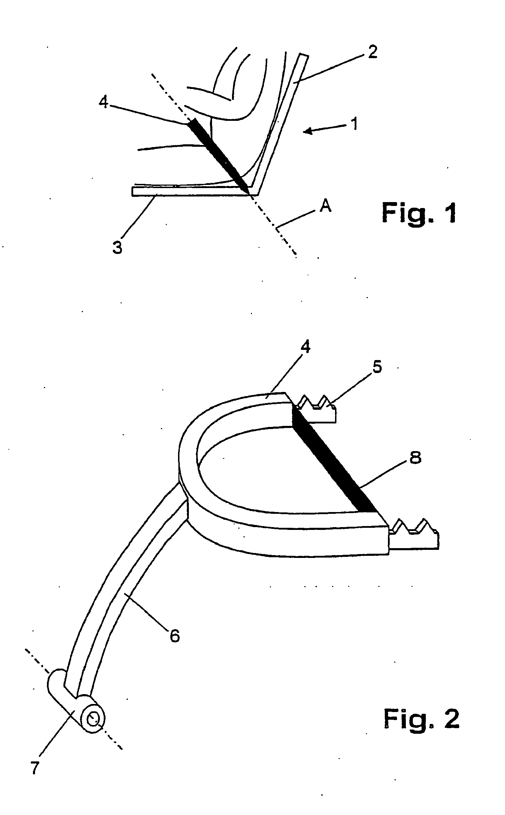

Fig. 1 zeigt in einer Seitenansicht den prinzipiellen Aufbau des erfindungsgemäßen Fahrgeschäft-Rückhaltesystems. Dieses umfasst einen Sitz 1 mit einer Rückenlehne 2 und einer Sitzfläche 3, wobei im Beckenbereich einer auf dem Sitz mit ca. 25° zur Horizontalen geneigten Sitzfläche an-geordneten Person eine Haltevorrichtung bzw. ein Halteteil 4 vorgesehen ist, das die Person bzw. deren Beckenbereich U-förmig umschließt und in einer Ebene A angeordnet ist, die mit der Horizontalen eine Winkel α von vorzugsweise ca. 45°, insbesondere 44,6° einschließt. Durch die erfindungsgemäße Anordnung des Halteteils im Beckenbereich der zu sichernden Person ist gewährleistet, dass jede Person, ob dick oder dünn, groß oder klein, bei größtmöglicher Bewegungsfreiheit sicher auf dem Sitz 1 gehalten wird und gegen Herausfallen gesichert ist, und zwar auch bei Fahrgeschäften mit Überschlägen, Steilkurven und dgl.

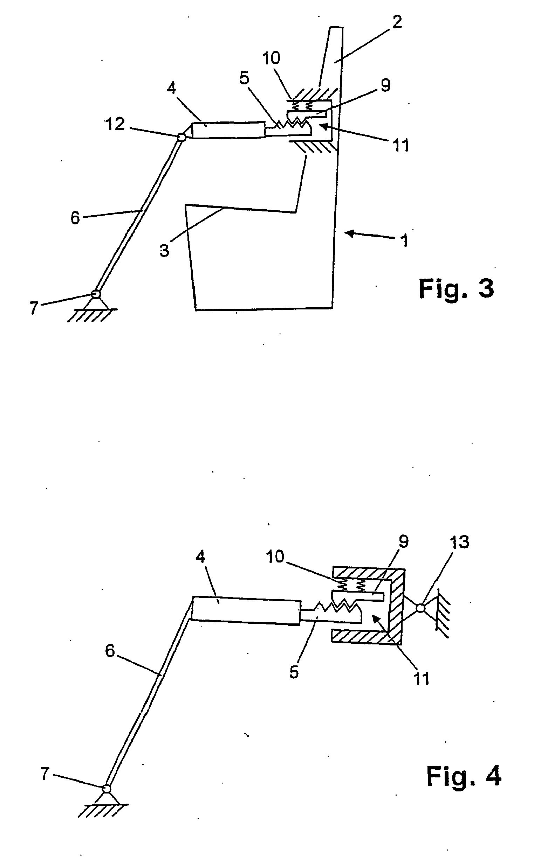

Die Haltevorrichtung bzw. das Halteteil kann gemäß den nachfolgenden Ausführungsformen unterschiedlich ausgeführt, insbesondere mehrteilig oder einteilig usw. ausgebildet sein. Gemäß der Ausführungsform der Fig. 2 ist das Halteteil 4 als U-förmiger Bügel ausgeführt, welcher zusammen mit dem starr an dem Bügel 4 angeordneten Hebelarm 6 gleichzeitig das Schließteil des erfindungsgemäßen Haltesystems bildet. Der Bügel 4 mit dem Hebelarm 6 ist über ein Drehgelenk 7, hier in Form einer Lagerbuchse, in die ein Lagerbolzen eingesetzt werden kann, drehbar gelagert, so dass der Bügel 4 vom Sitz weggeschwenkt und zu dem Sitz hingeschwenkt werden kann. An den Bügelenden sind Rastelemente 5, hier in Form einer Zahnstange, vorgesehen, die in ein nicht dargestelltes Gegenstück einrasten können und dadurch eine Verriegelung des Bügels 4 bspw. am Sitz bewirken. Dies ist bspw. in unterschiedlichen Variationen in den Fig. 3 und 4 dargestellt. Selbstverständlich sind auch andere Verriegelungssysteme denkbar, wie z. b. ein mit Bohrungen versehener Flachstahl, der mit einem beweglichen Bolzen zusammenwirkt, oder eine hydraulische Verriegelung.

Zusätzlich ist an den Bügel 4 gemäß der Fig. 2 ein selbstaufrollender Gurt 8 vorgesehen, der Teil eines Meßsystems zur Ermittlung der günstigsten Verriegelungsposition des Bügels 4 ist. Der selbstaufrollende Gurt 8 wird nämlich beim Verschwenken des Bügels 4 in Richtung der zu sichernden Person durch die Konturen der Person ausgebaucht und die Bestimmung der Länge des abgewickelten Gurtes kann zur Bestimmung der günstigsten Verriegelungsposition herangezogen werden. Hierzu sind nur entsprechende geeignete Vorrichtungen zur Messung der abgewickelten Länge des Gurts sowie zur Bestimmung der entsprechend günstigen Verriegelungsposition, z.B. ein entsprechendes Register mit gespeicherten Längen und entsprechenden Verriegelungspositionen, vorzusehen. Mit diesem Meßsystem können dann bspw. Warnhinweise an das Bedienpersonal ausgegeben werden, dass bei bestimmten Sitzen keine optimale Verriegelung erfolgt ist.

Die Fig. 3 zeigt in einer Seitenansicht den Bügel 4 mit Schwenkhebel 6 aus der Fig. 2 in Verbindung mit einem Sitz 1. Allerdings ist hierbei zu berücksichtigen, dass die Fig. 3 aufgrund der schematischen Darstellung nicht die erfindungsgemäße winkelige Anordnung des Halteteils 4 bezüglich der Horizontalen oder der Sitzfläche 3 wiedergibt. Die Fig. 3 dient jedoch zur Veranschaulichung, dass der U-förmige Bügel 4 an dem Schwenkarm 6 nicht nur starr angeordnet sein kann, wie in den Fig. 2 und 4, sondern auch über ein Gelenk 12. In diesem Fall ist dann die Verriegelung 11 starr im Sitz 1 integriert. Bei der anderen Ausführungsform der Fig. 2 und 4 ist hingegen die Verriegelung 11 über ein Drehgelenk 13 gelenkig am Sitz oder einem benachbarten Bauteil gelagert.

Die Verriegelung 11 selbst ist durch eine Ausnehmung gebildet, in der ein Rastelement 9 angeordnet ist, welches komplementär zu der Zahnstange 5 am Bügel 4 ausgebildet ist, so dass die Zähne der Zahnstange 5 in die Ausnehmungen des Rastelements 9 eingreifen können. Das Rastelement 9 ist bspw. über ein Federelement 10 in einer vorgespannten Position angeordnet, in der das Rastelement 9 und die Zahnstange 5 sich in gegenseitigem Eingriff befinden. Bei der Einrastung des Bügels 4 mit der Zahnstange 5 in der Verriegelung 11 wird das Rastelement 9 gegenüber der Federkraft der Federn 10 weggedrückt. Dabei sind die Zähne sowohl der Zahnstange 5 als auch die Rasthaken des Rastelements 9 so ausgebildet, dass ein weiteres Hineinschieben des Bügels 4 mit der Zahnstange 5 ohne größere Anstrengung möglich ist, während ein Herausziehen der Zahnstange 5 aus der Verriegelung 11 nur möglich ist, wenn das Bedienungspersonal die Vorspannung des Rastelements 9 bspw. ferngesteuert löst.

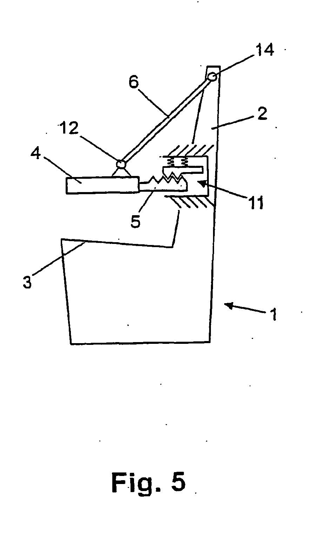

Fig. 5 zeigt eine Seitenansicht einer weiteren Ausführungsform, die den Ausführungsformen der Fig. 2 bis 4 weitestgehend entspricht, jedoch in der Anlenkung oder Anordnung des U-förmigen Bügels 4 unterschiedlich ist. Bei der Ausführungsform der Fig. 5 ist der U-förmige Bügel mit ein oder zwei Schwenkarmen bzw. Holmen 6 direkt am Sitz 1 angelenkt, und zwar über Drehgelenke 12 und 14, die zwischen Bügel 4 und Schwenkarm 6 bzw. Schwenkarm 6 und Rückenlehne 2 angeordnet sind. Ähnlich wie in der Ausführungsform der Fig. 2 sind an den Enden des U-förmigen Bügels 4 entsprechende Rastelemente 5 bzw. Zahnstangen zum Eingriff in die Verriegelung 11 vorgesehen. Die Anordnung von zwei Zahnstangen 5 an jedem Ende des U-förmigen Bügels hat den Vorteil, dass eine symmetrische Verriegelung bzw. Verrastung der Haltevorrichtung gegeben ist. Da bei dem Ausführungsbeispiel der Fig. 5 der Haltebügel 4 über die Schwenkarme 6 auch direkt am Sitz 1 angeordnet ist, ergibt sich eine kompakte und unabhängige Ausbildung des Haltesystems, die unabhängig von den umgebenden Bauteilen, z.B. Bodengruppen und dgl., an einem Fahrgeschäft angeordnet werden kann.

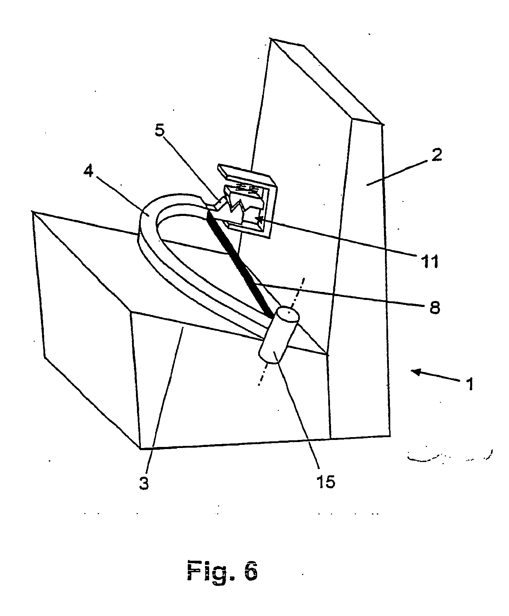

Eine weitere Ausführungsform ist in der perspektivischen Darstellung der Fig. 6 gezeigt. Das in der Fig. 6 gezeigt Haltesystem zeichnet sich dadurch aus, dass der Bügel 4 ohne Zwischenschaltung eines Hebel- bzw. Schwenkarms direkt über ein Drehgelenk 15 am Sitz 1 angelenkt ist. Wie bei den vorangegangenen Ausführungsformen ist hier erfindungsgemäß wiederum wesentlich, dass der Bügel in der anthropometrisch optimierten Ebene, nämlich unter einem Winkel von ca. 45° bis 50° zur Horizontalen, wobei die Sitzfläche 3 25° zur Horizontalen geneigt angeordnet ist. Dies kann bei der gezeigten Ausführungsform der Fig. 6 in einfacher Weise dadurch erreicht werden, dass die Drehachse des Drehgelenks 15 so angeordnet wird, dass sie senkrecht auf der anthropometrisch optimierten Ebene des Haltebügels 4 steht.

An dem freien Ende des Haltebügels 4 entgegengesetzt dem Ende, welches an dem Drehgelenk 15 angeordnet ist, ist wiederum ein Rastelement 5 zur Verriegelung des Bügels 4 im Sitz 1 vorgesehen. Auch diese Ausführungsform führt zu einer Einheit der Haltevorrichtung mit dem Sitz 1 und somit zu einer kompakten und unabhängigen Einheit des Haltesystems. Bei der gezeigten Ausführungsform der Fig. 6 ist wiederum das Meßsystem mit einem selbst aufwickelnden Gurt 8 verwirklicht. Dieses Meßsystem kann unabhängig von den Ausführungsformen der vorher geschilderten Varianten allgemein eingesetzt werden.

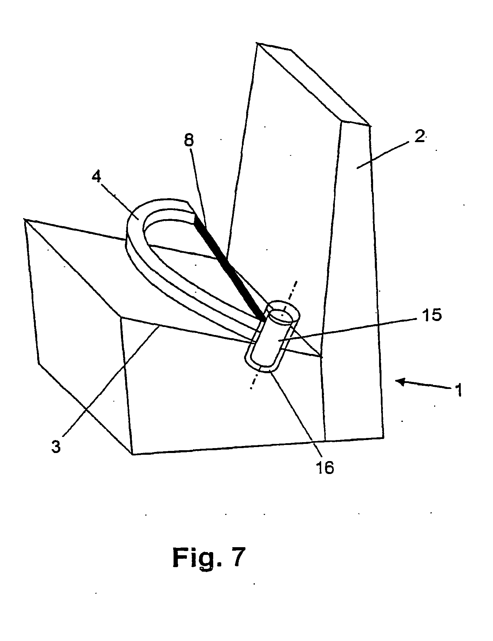

Die Ausführungsform der Fig. 7 unterscheidet sich gegenüber der Ausführungsform der Fig. 6 nur dahingehend, dass das Drehgelenk 15 für die gelenkige Anordnung des Bügels 4 am Sitz 1 zusätzlich mit einer Verriegelungseinheit 16 kombiniert ist, so dass in vorteilhafter Weise lediglich ein Gehäuse vorgesehen werden muss. Eine entsprechende Verriegelung kann z.B. durch das Vorsehen eines Zahnrades am Drehgelenk 15 und eines entsprechenden Rastelementes analog zu den vorher beschriebenen Verriegelungssystemen verwirklicht werden. Die Kombination von Drehgelenk 15 und Verriegelungseinheit 16 hat den Vorteil, dass die Verriegelung in einem abgeschlossenen Gehäuse erfolgt, so dass Verletzungen oder Beschädigungen durch die Verriegelung vermieden werden.

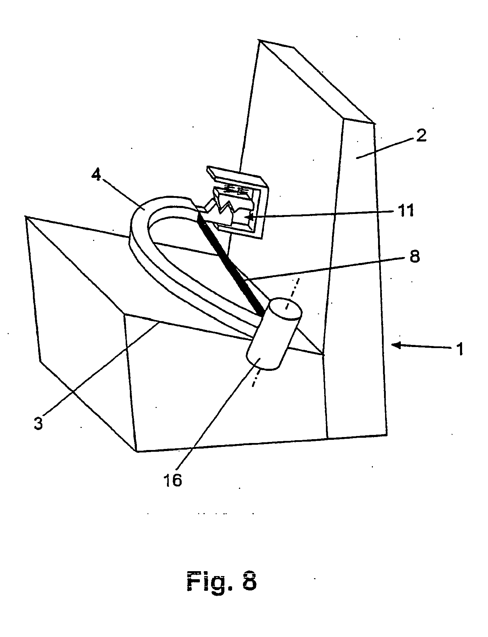

Bei der Variante gemäß der Fig. 7 ist aufgrund der Verriegelung am Drehgelenk 15 auf eine weitere Verriegelung am anderen Ende des Bügels 4 verzichtet worden, während bei der Ausführungsform der Fig. 8 zwei Verriegelungen vorgesehen worden sind, nämlich einmal die Gelenkverriegelung 16 am Drehgelenk 15 und einmal am gegenüberliegenden Ende des Haltebügels 4.

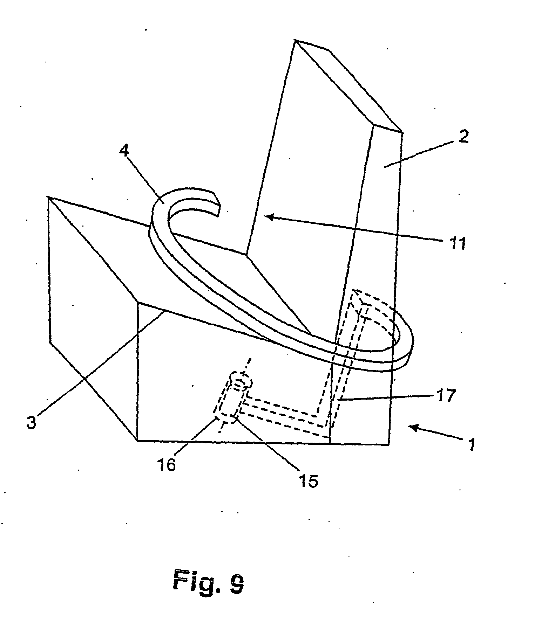

Eine gegenüber den vorangegangenen Ausführungsformen abgeänderte Variante ist in der perspektivischen Darstellung der Fig. 9 dargestellt. Bei dieser Ausführungsform ist das Drehgelenk 15, vorzugsweise mit integrierter mehrstufiger Verriegelung 16 unterhalb des Sitzes 1 oder im unteren Bereich des Sitzes 1 angeordnet und der Haltebügel 4 ist über ein Gestänge 17 mit dem Drehgelenk 15 verbunden. Hierbei ist zu beachten, dass die Drehachse exzentrisch zur Sitzmitte bzw. zum gedachten Bügelkreismittelpunkt angeordnet sein muss, so dass sich bei einem Verschwenken des Bügels 4 über das Gestänge 17 um das Drehgelenk 15 eine Abstandsveränderung des Bügels 4 zum Sitz 1 ergibt und somit eine an die Größe der zu sichernden Person angepasste Verriegelungsposition des Bügels 4 erhalten werden kann. Das Gestänge 17 muss jedoch nicht zwingend rotatorisch bewegt werden. Der Haltebügel 4 kann auch durch eine beliebige Bewegung, beispielsweise entlang einer beliebig im Raum gekrümmten Führungsschiene, Kulisse oder dergleichen bewegt werden.

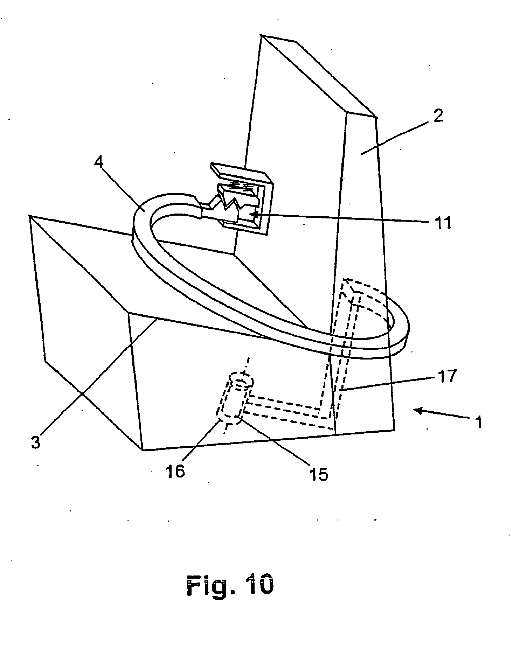

Analog zu der Ausführungsform der Fig. 6 kann auch bei einer derartigen Ausführungsform der Fig. 9 eine zusätzliche Verriegelung am anderen Ende des Bügels 4 bzw. am Sitz 1 realisiert werden, wie dies in Fig. 10 dargestellt ist.

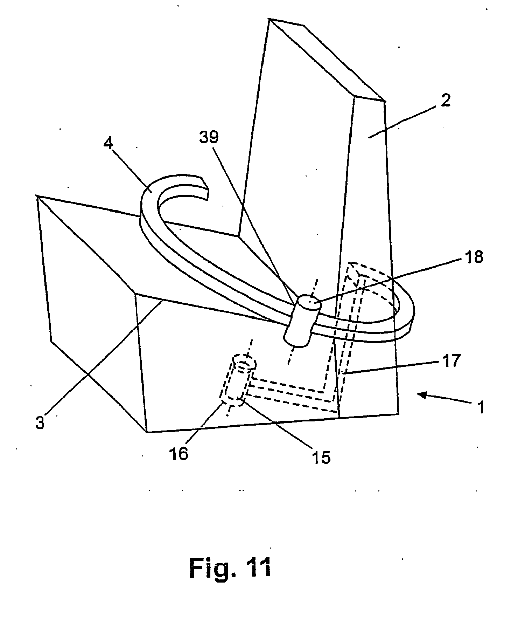

Des weiteren ist es gemäß der Ausführungsform der Fig. 11 möglich, dass Halteteil 4 bzw. den Bügel 4 weiter zu unterteilen und zwar mittels eines weiteren Drehgelenks 18. Auf diese Weise ist es möglich, eine Grob- und Feinverriegelung bzw. Positionierung des Bügels 4 zu ermöglichen, insbesondere wenn das Drehgelenk 18 ebenfalls eine Verriegelung integriert hat, die mehrere Verriegelungspositionen ermöglicht, wie dies bei den vorangegangenen Ausführungsbeispielen der Fall ist. In diesem Fall kann dann zunächst der Bügel 4 über das Drehgelenk 15 und die darin integrierte Verriegelung 16 in eine grobe Verriegelungsposition gebracht werden, während durch das Verschwenken des Endes des Bügels 4 um das Drehgelenk 18 mit der integrierten Verriegelung 39 eine Feinpositionierung möglich ist. Bei dieser Variante kann der Drehpunkt 15 zentrisch angeordnet sein (im Gegensatz zu den vorangegangenen Varianten).

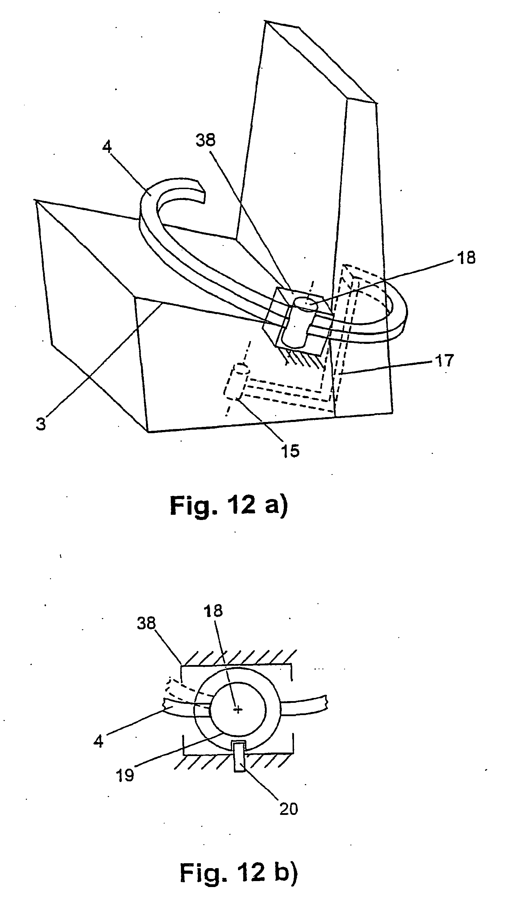

Eine weitere Ausführungsform des Haltesystems ist in Fig. 12 in den Teilbildern (a) und (b) dargestellt. In der perspektivischen Ansicht der Fig. 12 (a) ist zu erkennen, dass die Haltevorrichtung ebenfalls in ein Gestänge 17 und einen Haltebügel 4 unterteilt worden ist, wobei das Gestänge 17 drehbar um das Drehgelenk 15 angeordnet ist, während der Haltebügel 4 wiederum über das Drehgelenk 18 drehbar am Gestänge 17 befestigt ist. Das Gestänge 17 ist um das Drehgelenk 15 frei drehbar und wird durch den Verriegelungsmechanismus 38, der in Fig. 12 (a) schematisch dargestellt ist, nach einer ersten Zuführung des Gestänges 17 um die Drehachse 15 festgelegt. Die Verriegelung erfolgt dabei beispielsweise durch einen Arretierbolzen 20, der in der Draufsicht der Fig. 12 (b) gezeigt ist. Der Haltebügel 4 kann dann um das Drehgelenk 18 weitere in Richtung der zu sichernden Position bewegt werden, wobei eine Feinverriegelung 19, die im Drehgelenk 18 integriert ist, für die Verriegelung und Sicherung des Haltebügels 4 sorgt.

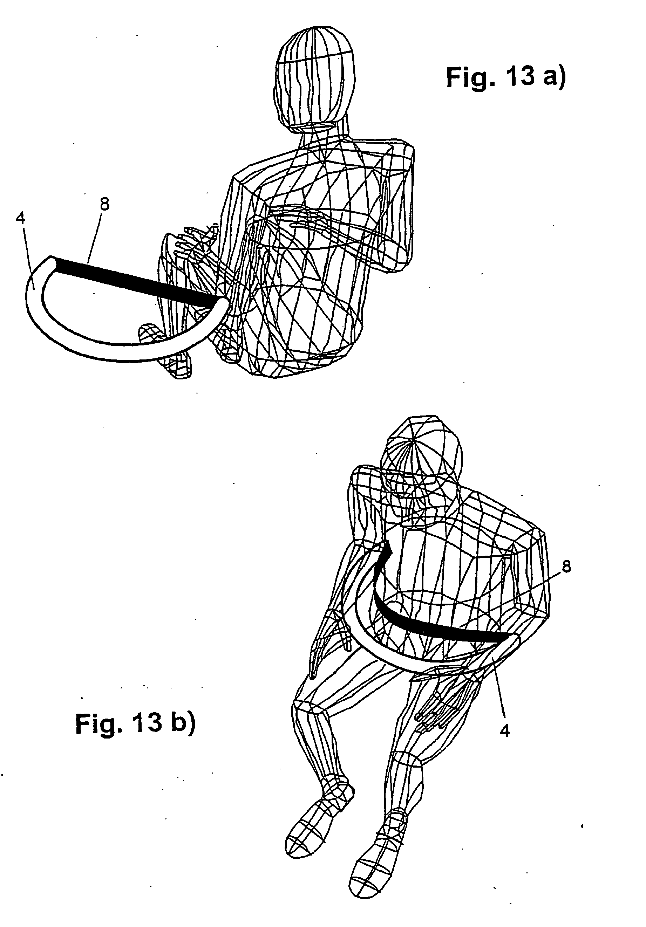

Die Fig. 13 (a) und (b) verdeutlichen die Wirkungsweise des Meßsystems mit dem sich selbst aufrollbaren Gurt 8. Im geöffneten Zustand der Haltevorrichtung ist gemäß Fig. 13 (a) der Gurt straff zwischen den Enden des Bügels 4 gespannt. Beim Zuziehen des Bügels 4 gemäß der Darstellung der Fig. 13 (b) legt sich der Gurt 8 an den Körper der zu sichernden Person an, was zu einer Verlängerung des Gurtes 8 führt. Diese Verlängerung des Gurtes 8 kann dann von einem Längenmeßsystem festgestellt werden. Ein Vergleich abgespeicherter Längenänderungen mit dazugehörigen Verriegelungspositionen gibt dann eine optimale Verriegelungsposition vor. Sollte dies nicht erreicht sein, kann durch ein entsprechendes Warnsystem ein Hinweis an das Bedienungspersonal ausgegeben werden oder durch einen automatischen Notschalter kann sogar das Fahrgeschäft gestoppt werden.

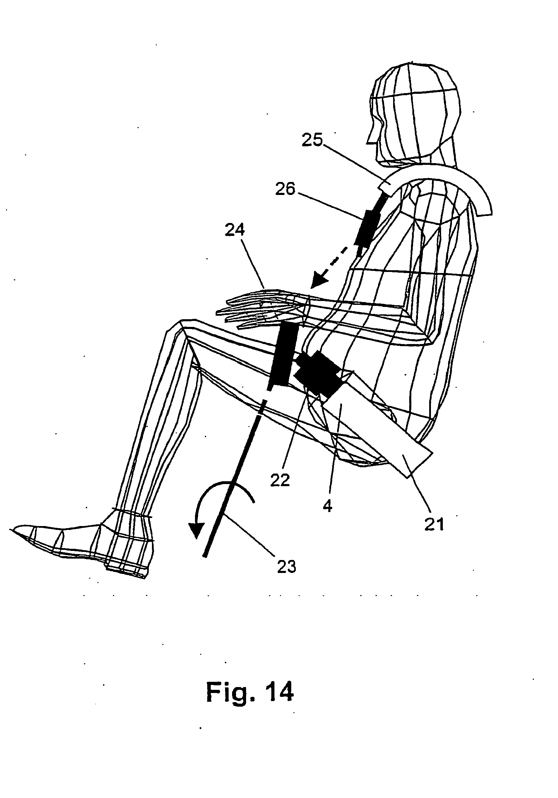

Obwohl gemäß der vorliegenden Erfindung eine ausreichende Sicherung einer Person auf einem Sitz 1 durch die Haltevorrichtung im Beckenbereich der zu sichernden Person gegeben ist, kann es unter Umständen erforderlich sein, auch weitere Teile des Körpers, wie z.B. den Oberkörper oder die Beine in bestimmten Positionen zu sichern, um ein Zusammenstoßen der zu sichernden Person mit knapp vorbei rauschenden Gegenständen oder dgl. zu verhindern. Zu diesem Zweck können gemäß der Ausführungsform der Fig. 14 weitere Haltevorrichtungen bzw. Halteteile, wie z.B. ein Schulterbügel 25, Hosenträgergurt 26 und dgl. vorgesehen sein. Diese zusätzliche Sicherung ist nicht mehr Teil der Erfindung.

Bei dem Ausführungsbeispiel der Fig. 14 ist zudem das U-förmige Halteteil 4 zweiteilig ausgebildet, und zwar aus einem fixen starren Schaft 21 und einem flexiblen Gurt 22, der über ein Gurtschloss an dem Schaft 21 befestigt werden kann. Durch die entsprechende Ausbildung des Schafts 21 ist auch bei dieser Ausführungsform die erfindungsgemäße Anordnung des U-förmigen Halteteils in der anthropometrischen optimierten Halteebene gegeben.

Zur Feststellung der Hosenträgergurte 26 kann zusätzlich ein zwischen den Beinen anzuordnendes Gurtschloss vorgesehen sein, an dem bspw. auch der Gurt 22 des U-förmigen Halteteils 4 befestigt sein kann. Um das Gurtschloss 24 in die entsprechende Position zu bringen, ist ein verschwenkbarer Hebel 23 vorgesehen.

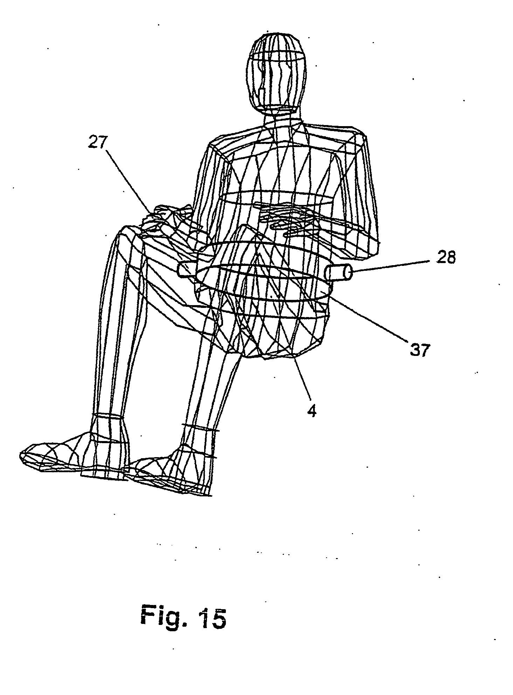

Bei der Ausführungsform der Fig. 15 ist als Teil der Haltevorrichtung ein Ring 37 vorgesehen, der quasi wie ein Gürtel um die zu sichernde Person gelegt wird. Durch die an dem Ring 37 vorgesehenen Verriegelungselemente 28 und 27 wird der Ring 37 in den entsprechenden Verriegelungsvorrichtungen am Sitz (nicht gezeigt) eingerastet. Auf diese Weise bildet der vordere Teil des Ringes 37 und die nicht gezeigte Verriegelung, in die die Verriegelungselemente 27 und 28 eingreifen, den U-förmigen Halteteil in der anthropometrisch, optimierten Haltebene. Der Vorteil dieser Ausführungsform liegt darin, dass die zu sichernde Person bereits vor Besteigen des Fahrgeschäfts den Sicherungsring 37 anlegen kann, so dass die eigentliche Sicherung am Fahrgeschäft nur wenig Zeit in Anspruch nimmt und deshalb ein hoher Durchsatz an Fahrgästen möglich ist. Außerdem ermöglicht die Sicherung durch den Ring die anthropometrisch optimierte Halteebene in einem weiten Winkelbereich zu wählen. Denkbar ist hierbei auch, dass der Ring eine entsprechende Form aufweist, z.B. in der Seitenansicht eine Dreiecksform, so dass die Haltefunktionen von integrierten Tragelementen übernommen werden kann, die entlang eines Schenkels des Dreiecks in der anthropometisch optimalen Ebene verlaufen.

## Patentansprüche

1. Fahrgeschäft-Rückhaltesystem für Personen, die dynamischen Bewegungen ausgesetzt sind, wie Beschleunigungs-, Verzögerungs- und/oder Schwenk- und Rotationsbewegungen umfassend einen Sitz (1) zur Aufnahme einer Person, mit einer Sitzfläche (3) und einer Rückenlehne (2) sowie einer Haltevorrichtung mit mindestens einem zwischen mindestens einer Einstiegsstellung und mindestens einer Haltestellung bewegbaren Schließteil **dadurch gekennzeichnet, dass**
die Haltevorrichtung zumindest im Bereich des Verbindungsbereichs von Sitzfläche (3) und Rückenlehne (2) vorgesehen ist, so dass die Haltevorrichtung in der Haltestellung den Beckenbereich der im Sitz aufgenommenen Person zumindest im überwiegenden Teil mit einem im wesentlichen U-förmigen Halteteil (4) umschließt, wobei die Haltevorrichtung in der Haltestellung sich zumindest mit dem Halteteil (4) in einer anthropometrisch optimierten Ebene erstreckt, wobei die anthropometrisch optimierte Ebene eine Ebene ist, die in einem Winkel von 30° bis 60°, insbesondere 40° bis 50°, vorzugsweise ca. 45° oder 50°, höchst vorzugsweise 44,6° zur Horizontalen bei zum Ein- und Ausstieg bereit gestelltem Fahrzeug geneigt ist, wobei die Sitzfläche zur Horizontalen im Bereich von 0° bis 30°, vorzugsweise 25° geneigt ist und die Sitzfläche zur anthropometrisch optimierten Ebene in einem Winkel von 20° bis 25° geneigt ist, und die Rückenlehne zur Sitzfläche einen Winkel von 70° bis 95°, insbesondere 85° einschließt, so dass das Halteteil (4) im Notfall das gesamte Gewicht der zu sichernden Person abfängt

2. Fahrgeschäft-Rückhaltesystem nach Anspruch 1,
**dadurch gekennzeichnet, dass**
das Halteteil (4) und/oder Schließteil mindestens einen starren Bügel oder Rahmen,
umfasst wobei insbesondere Halteteil und/oder Schließteil mehrteilig ausgeführt sein können.

3. Fahrgeschäft-Rückhaltesystem nach einem der vorhergehenden Ansprüche,
**dadurch gekennzeichnet, dass**
die Haltevorrichtung so ausgebildet ist, dass der Bügel in verschiedenen Positionen verriegelt werden kann, wobei sich die unterschiedlichen Verriegelungspositionen dadurch auszeichnen, dass sowohl die Sitzbreite als auch die Sitztiefe mit stärker angezogenem Bügel verringert wird.

4. Fahrgeschäft-Rückhaltesystem nach einem der vorhergehenden Ansprüche,
**dadurch gekennzeichnet, dass**
die Haltevorrichtung eine Verriegelung (11) zum Verriegeln des Schließteiles umfasst, die insbesondere einen Rastmechanismus aufweist, bei dem mehrere Verriegelungsstellungen derart möglich sind, dass das Schließteil in unterschiedlichem Abstand zum Sitz verriegelt werden kann, wobei der Benutzer die unterschiedlichen Verriegelungsstellungen nur in einer Reihenfolge mit abnehmendem Abstand einstellen kann und eine Lösung der Verriegelung durch das Bedienungspersonal, insbesondere ferngesteuert, erfolgt, wobei insbesondere die Verriegelung eine Zahnleiste oder Lochplatte aufweist, in die ein Rastelement in unterschiedlichen Positionen eingreifen kann, oder durch eine hydraulische Verriegelung realisiert ist.

5. Fahrgeschäft-Rückhaltesystem nach einem der vorhergehenden Ansprüche,
**dadurch gekennzeichnet, dass**
die Haltevorrichtung am Sitz (1) angeordnet ist, insbesondere die Verriegelung (11) im Sitz integriert ist.

6. Fahrgeschäft-Rückhaltesystem nach dem Oberbegriff des Anspruchs 1, insbesondere nach einem der vorhergehenden Ansprüche,
**dadurch gekennzeichnet, dass**
die Haltevorrichtung ein Messsystem zur Ermittlung der erforderlichen Schließstellung bzw. Haltestellung umfasst, welches ein an den Enden eines U-förmigen Halteteils (4) angeordnetes band- oder seilartiges Element (8) umfasst, das sich an die auf dem Sitz angeordnete Person anlegt, wobei durch die Ausbauchung des band- oder seilartigen Elements die erforderliche Schließstellung bestimmbar ist.

7. Fahrgeschäft-Rückhaltesystem nach Anspruch 6,
**dadurch gekennzeichnet, dass**
das band- oder seilartige Element (8) ein sich selbst aufwickelnder Gurt oder dgl. ist, dessen Auszugslänge für die Bestimmung der Schließstellung verwendet wird.

8. Fahrgeschäft-Rückhaltesystem nach Anspruch 6,
**dadurch gekennzeichnet, dass**
das band- oder seilartige Element (8) ein elastisches oder festes, aber bewegliches Band, Seil oder dgl. ist, dessen Dehnung und/oder Zugkraft für die Bestimmung der Schließstellung verwendet wird.

9. Fahrgeschäft-Rückhaltesystem nach einem der vorhergehenden Ansprüche,
**dadurch gekennzeichnet, dass**
das Schließteil einen U-förmigen starren Bügel (4), vorzugsweise mit Polsterung, umfasst, der an einem seiner Enden, insbesondere an beiden Enden ein Rastelement (5) zum Eingriff in die Verriegelung (11) aufweist und über eine oder mehrere am Boden vor dem Sitz oder an dem Sitz angelenkte Hebelstangen (6) oder Kulissenführungen verschwenkbar ist, wobei das Halteteil durch den Bügel und die Verriegelung gebildet wird.

10. Fahrgeschäft-Rückhaltesystem nach Anspruch 9,
**dadurch gekennzeichnet, dass**
der Bügel (4) über ein Drehgelenk an der oder den Hebelstangen (6) oder die Verriegelung (11) über ein Drehgelenk am Sitz (1) befestigt ist.

11. Fahrgeschäft-Rückhaltesystem nach einem der Ansprüche 1 bis 8,
**dadurch gekennzeichnet, dass**
das Schließteil einen U-förmigen starren Bügel, (4) vorzugsweise mit Polsterung, umfasst, der an einem seiner Enden ein Drehgelenk aufweist, welches insbesondere seitlich an dem Sitz (1) angeordnet ist, wobei die Verriegelung (11) in dem Drehgelenk integriert und/oder am anderen Ende (zweiten Ende) des Bügels ein Rastelement zum Eingriff in die Verriegelung vorgesehen ist, und wobei das Halteteil durch den Bügel und gegebenenfalls die Verriegelung am zweiten Ende des Bügels gebildet wird.

12. Fahrgeschäft-Rückhaltesystem nach Anspruch 11,
**dadurch gekennzeichnet, dass**
die Drehachse des Drehgelenks (15) senkrecht auf der Halteteilebene steht.

13. Fahrgeschäft-Rückhaltesystem nach Anspruch 11 oder 12,
**dadurch gekennzeichnet, dass**
das Drehgelenk (16) unterhalb des Sitzes angeordnet ist und der U-förmige Bügel über ein Gestänge mit dem Drehgelenk verbunden ist, welches sich exzentrisch zur Sitzmitte und/oder zur Bügelachse befindet, so dass der U-förmige Bügel beim Verschwenken seinen Abstand zum Sitz verändert.

14. Fahrgeschäft-Rückhaltesystem nach einem der Ansprüche 9 bis 13,
**dadurch gekennzeichnet, dass**
der U-förmige Bügel (4) zweiteilig ausgeführt ist, wobei die beiden Teile über ein verrastbares, insbesondere mehrfach verrastbares Drehgelenk miteinander verbunden sind.

15. Fahrgeschäft-Rückhaltesystem nach einem der Ansprüche 1 bis 8,
**dadurch gekennzeichnet, dass**
das Schließteil einen U-förmigen starren Bügel, vorzugsweise mit Polsterung, umfasst, der an einem seiner Enden über ein Gestänge in einer Schiebekulisse so aufgenommen ist, dass der U-förmige Bügel beim Verschieben seinen Abstand zum Sitz verändert und in eine Haltestellung gelangt, und wobei die Verriegelung in der Schiebkulisse integriert und/oder am anderen Ende (zweiten Ende) des Bügels ein Rastelement (5) zum Eingriff in die Verriegelung (11) vorgesehen ist, und wobei das Halteteil durch den Bügel und gegebenenfalls die Verriegelung am zweiten Ende des Bügels gebildet wird.

16. Fahrgeschäft-Rückhaltesystem nach einem der Ansprüche 1 bis 8,
**dadurch gekennzeichnet, dass**
das Schließteil durch einen Ring (37) gebildet wird, den die Person vor dem Platznehmen auf dem Sitz im Beckenbereich anlegt, und welcher Rastelemente (27,28) zum Eingriff in eine insbesondere am Sitz angeordnete Verriegelung aufweist, wobei das U-förmige Halteteil durch einen Teil des Ringes und die Verriegelung gebildet wird.

17. Fahrgeschäft-Rückhaltesystem nach Anspruch 16,
**dadurch gekennzeichnet, dass**
der Ring (37) zwei, insbesondere symmetrisch angeordnete Rastelemente (27,28) aufweist

18. Fahrgeschäft-Rückhaltesystem nach einem der vorhergehenden Ansprüche,
**dadurch gekennzeichnet, dass**
der Abstand des U-förmigen Halteteils (4) zum Sitz (1) bzw. die Verriegelungsstellungen und die Länge der Sitzfläche (3) und/oder Rückenlehne (2) so aufeinander abgestimmt sind, dass in Haltestellung ein Herausfallen der Person unmöglich ist.

19. Fahrgeschäft-Rückhaltesystem nach einem der vorhergehenden Ansprüche,
**dadurch gekennzeichnet, dass**
die Sitzfläche (3) und/oder die Rückenlehne (2) den Körperkonturen angepasst sind, insbesondere an den Rändern diese hochgezogen sind.

## Claims

1. A transport Company restraining System for people who are subjected to dynamic movements, such as acceleration, braking and/or pivotal and rotary movements, including a seat (1) for receiving a person with a seat surface (3) and a backrest (2) and a retaining device with at least one closing portion movable between at least one entry position and at least one retaining position, **characterised in that** the retaining device is provided at least in the region of the connecting region of the seat surface (3) and backrest (2) so that, in the retaining position, the retaining device surrounds the pelvis region of the person received in the seat, at least to a predominant extent, with a substantially U-shaped retaining portion (4), whereby, in the retaining position, at least with the retaining portion (4) of the retaining device extends in an anthropometrically optimised plane, whereby the anthropometrically optimised plane is inclined at an angle of 30° to 60°, particularly 40° to 50°, preferably ca. 45° or 50°, most preferably 44.6° to the horizontal when the vehicle is made ready for entry and exit, wherein the seat surface is inclined to the horizontal in the range of 0° to 30°, preferably 25°, and the seat surface is inclined relative to the anthropometrically optimised plane at an angle of 20° to 25°, and the backrest defines with the seat surface an angle of 70° to 95°, particularly 85°, so that, if necessary, the retaining portion (4) Supports the entire weight of the person to be secured.

2. A transport Company restraining System as claimed in Claim 1, **characterised in that** the retaining portion (4) and/or closing portion include at least one rigid bracket or frame, wherein, in particular, the retaining portion and/or closing portion can be of multi-part construction.

3. A transport Company restraining System as claimed in one of the preceding Claims, **characterised in that** the retaining device is so constructed that the bracket can be locked in different positions, whereby the different locked positions are distinguished by the fact that both the breadth of the seat and the depth of the seat are reduced when the bracket is tightened.

4. A transport Company restraining System as claimed in one of the preceding Claims, **characterised in that** the retaining device includes a lock (11) for locking the closing portion, which includes, in particular, a ratchet mechanism with which a number of locked positions are possible such that the closing portion can be locked at a different distance from the seat, whereby the user can set the different locked positions only in a sequence with decreasing distance and release of the lock is effected by the user, particularly remotely controlled, whereby, in particular, the lock includes a toothed bar or apertured plate, in which a locking element can engage in different positions or is constituted by a hydraulic lock.

5. A transport Company restraining System as claimed in one of the preceding Claims, **characterised in that** the retaining device is arranged on the seat (1) and, in particular, the lock (11) is integrated into the seat.

6. A transport Company restraining System as claimed in the preamble of Claim 1, particularly as claimed in one of the preceding Claims,
**characterised in that** the retaining device includes a measuring system for determining the necessary closed position or retaining position, which includes a band- or rope-like element (8), which is arranged at the ends of a U-shaped retaining portion (4) and engages the person disposed on the seat, whereby the necessary closed position may be determined by the bulging of the band- or rope-like element.

7. A transport Company restraining system as claimed in Claim 6, **characterised in that** the band- or rope-like element (6) is a self-winding belt or the like, whose withdrawn length is used for the determination of the closed position.

8. A transport Company restraining system as claimed in Claim 6, **characterised in that** the band- or rope-like element (8) is an elastic or rigid, but movable, band, rope or the like, whose expansion and/or tensional force is used for the determination of the closed position.

9. A transport Company restraining system as claimed in one of the preceding Claims, **characterised in that** the closing portion includes a U-shaped rigid bracket (4), preferably with cushioning, which, at one of its ends and particularly at both ends, has a locking element (5) for engagement with the lock (11) and is pivotable by means of one or more lever arms (6) or connected link guides pivotally connected to the floor in front of the seat or on the seat, whereby the retaining portion is constituted by the bracket and the lock.

10. A transport Company restraining system as claimed in Claim 9,
**characterised in that** the bracket (4) is secured by means of a rotary joint to the lever arm(s) (6) or the lock (11) is secured to the seat (1) by means of a rotary joint.

11. A transport Company restraining system as claimed in one of Claims 1 to 8, **characterised in that** the closing portion includes a U-shaped rigid bracket (4), preferably with cushioning, which has a rotary joint at one of its ends, which is arranged, in particular, laterally on the seat (1), whereby the lock (11) is integrated into the rotary joint and/or a locking element for engagement in the lock is provided at the other end (second end) of the bracket and whereby the retaining portion is constituted by the bracket and optionally the lock at the second end of the bracket.

12. A transport Company restraining system as claimed in Claim 11, **characterised in that** the rotary axis of the rotary joint (15) extends perpendicular to the retaining portion plane.

13. A transport Company restraining system as claimed in Claim 11 or 12, **characterised in that** the rotary joint (16) is arranged below the seat and the U-shaped bracket is connected by means of a linkage to the rotary joint, which is situated eccentrically with respect to the centre of the seat and/or with respect to the axis of the bracket so that the U-shaped bracket alters its distance from the seat when it is pivoted.

14. A transport Company restraining system as claimed in one of Claims 9 to 13, **characterised in that** the U-shaped bracket is of two-part construction, whereby the two parts are connected together by means of a rotary joint which is lockable in position, particularly in a number of positions.

15. A transport Company restraining system as claimed in one of Claims 1 to 8, **characterised in that** the closing portion includes a U-shaped rigid bracket, preferably with cushioning, which is so received at one of its ends in a sliding link by means of a linkage that when the U-shaped bracket is moved it alters its spacing from the seat and moves into a retaining position and whereby the lock is integrated into the sliding link and/or the locking element (5) for engagement with the lock (11) is provided at the other end (second end) of the bracket and wherein the retaining portion is constituted by the bracket and optionally the lock at the second end of the bracket.

16. A transport Company restraining system as claimed in one of Claims 1 to 8, **characterised in that** the closing portion is constituted by a ring (37), which engages the person, before sitting on the seat, in the pelvis region and which includes locating elements (27, 28) for engagement in a lock arranged, in particular, on the seat, whereby the U-shaped retaining portion is constituted by a portion of the ring and the lock.

17. A transport Company restraining system as claimed in Claim 16, **characterised in that** the ring (37) includes two locating elements (27, 28), in particular symmetrically arranged.

18. A transport Company restraining system as claimed in one of the preceding claims, **characterised in that** the spacing of the U-shaped retaining portion (4) from the seat (1) or the locked positions and the length of the seat surface (3) and/or baclcrest (2) are so matched to one another that in the retaining position it is impossible for a person to fall out.

19. A transport Company restraining system as claimed in one of the preceding claims, **characterised in that** the seat surface (3) and/or the backrest (2) are matched to the contours of the body and, in particular, they are raised at the edges.

## Revendications

1. Système de retenue de manège pour des personnes qui sont exposées aux mouvements dynamiques tels que des mouvements d'accélération, de ralentissement et/ou de pivotement et de rotation, comprenant un siège (1) pour recevoir une personne, avec une surface d'assise (3) et un dossier (2), ainsi qu'un dispositif de retenue avec au moins un élément de fermeture mobile entre au moins une position d'accès et au moins une position de retenue, **caractérisé en ce que** le dispositif de retenue est prévu au moins dans la zone de la zone de liaison de la surface d'assise (3) et du dossier (2) de sorte que le dispositif de retenue entoure dans la position de retenue la zone du bassin de la personne reçue dans le siège au moins dans la partie principale avec un élément de retenue (4) essentiellement en forme de U, le dispositif de retenue s'étendant en position de retenue au moins avec l'élément de retenue (4) dans un plan optimisé de manière anthropométrique, le plan optimisé de manière anthropométrique étant un plan qui est incliné dans un angle de 30 à 60°, en particulier de 40 à 50°, de préférence environ à 45 ou 50°, de préférence au maximum à 44,6° par rapport à l'horizontale lorsque le véhicule est mis à disposition pour la montée et la descente, la surface d'assise étant inclinée par rapport à l'horizontale dans la plage de 0 à 30°, de préférence à 25°, et la surface d'assise est incline par rapport au plan optimise de manière anthropométrique dans un angle de 20° à 25°, et le dossier formant un angle de 70 à 95°, en particulier de 85° par rapport à la surface d'assise, de sorte que l'élément de retenue (4) en cas d'urgence intercepte le poids total de la personne à protéger.

2. Système de retenue de manège selon la revendication
1, **caractérisé en ce que**
l'élément de retenue (4) et/ou l'élément de fermeture comprend au moins un étrier ou cadre rigide, en particulier l'élément de retenue et/ou l'élément de fermeture pouvant être réalisé en plusieurs parties.

3. Système de retenue de manège selon l'une quelconque des revendications précédentes,
**caractérisé en ce que** le dispositif de retenue est réalisé de sorte que l'étrier puisse être verrouillé dans différentes positions, les différentes positions de verrouillage se distinguant de par le fait qu'aussi bien la largeur que la profondeur de siège sont réduites avec un étrier serre plus fortement.

4. Système de retenue de manège selon l'une quelconque des revendications précédentes,
**caractérisé en ce que**
le dispositif de retenue comprend un verrouillage (11) pour le verrouillage de l'élément de fermeture, lequel présente en particulier un mécanisme à encliquetage, pour lequel plusieurs positions de verrouillage sont possibles de sorte que l'élément de fermeture puisse être verrouillé à une distance différente par rapport au siège, l'utilisateur pouvant régler les différentes positions de verrouillage uniquement dans un ordre à une distance décroissante et le verrouillage étant desserré par les opérateurs, en particulier de manière télécommandée, en particulier le verrouillage présentant une barrette dentée ou une plaque à trous, dans laquelle un élément d'encliquetage peut s'engager dans différentes positions, ou est réalisé par un verrouillage hydraulique.

5. Système de retenue de manège selon l'une quelconque des revendications précédentes,
**caractérisé en ce que**
le dispositif de retenue est disposé sur le siège (1), en particulier le verrouillage (11) est intégré dans le siège.

6. Système de retenue de manège selon le préambule de la revendication 1, en particulier selon l'une quelconque des revendications précédentes,
**caractérisé en ce que**
le dispositif de retenue comprend un Système de mesure pour la détermination de la position de fermeture requise respectivement position de retenue, qui comprend un élément (8) de type bande ou câble dispose au niveau des extrémités d'un élément de retenue (4) en forme de U, lequel élément s'applique contre la personne disposée sur le siège, la position de fermeture requise pouvant être déterminée par le bombement de l'élément de type bande ou câble.

7. Système de retenue de manège selon la revendication 6,
**caractérisé en ce que**
l'élément (8) de type bande ou câble est une sangle ou similaire s'enroulant sur elle-même, dont la longueur d'extraction est utilisée pour la détermination de la position de fermeture.

8. Système de retenue de manège selon la revendication 6,
**caractérisé en ce que**
l'élément de type bande ou câble (8) est une bande, un câble ou similaire élastique ou fixe mais mobile, dont l'étirement et/ou la force de traction est utilisée pour la détermination de la position de fermeture.

9. Système de retenue de manège selon l'une quelconque des revendications précédentes,
**caractérisé en ce que**
l'élément de fermeture comprend un étrier (4) rigide en forme de U, de préférence avec un rembourrage qui présente au niveau de l'une de ses extrémités, en particulier au niveau des deux extrémités, un élément d'encliquetage (5) pour l'engagement dans le verrouillage (11) et peut être pivoté par une ou plusieurs tiges de levier (6) articulées sur le fond devant le siège ou sur le siège, ou par des guides de coulisse, l'élément de retenue étant forme par l'étrier et le verrouillage.

10. Système de retenue de manège selon la revendication 9,
**caractérisé en ce que**
l'étrier (4) est fixé par une articulation tournante sur la ou les tiges de levier (6) ou le verrouillage (11) est fixé par une articulation tournante sur le siège (1).

11. Système de retenue de manège selon l'une quelconque des revendications 1 à 8, **caractérisé en ce que** l'élément de fermeture comprend un étrier rigide (4) en forme de U, de préférence avec un rembourrage qui présente au niveau de l'une de ses deux extrémités une articulation tournante qui est disposée en particulier latéralement sur le siège (1), le verrouillage (11) étant intégré dans l'articulation tournante et/ou un élément d'encliquetage pour l'engagement dans le verrouillage étant prévu au niveau de l'autre extrémité (seconde extrémité) de l'étrier, et l'élément de retenue étant forme par l'étrier et éventuellement le verrouillage au niveau de la seconde extrémité de l'étrier.

12. Système de retenue de manège selon la revendication 11,
**caractérisé en ce que**
l'axe de rotation de l'articulation tournante (15) est vertical sur le plan de l'élément de retenue.

13. Système de retenue de manège selon la revendication 11 ou 12,
**caractérisé en ce que**
l'articulation tournante (16) est disposée au-dessous du siège et l'étrier en forme de U est relié par une tringlerie à l'articulation tournante, qui se trouve de manière excentrée par rapport au milieu du siège et/ou à l'axe d'étrier de sorte que l'étrier en forme de U modifie sa distance par rapport au siège lors du pivotement.

14. Système de retenue de manège selon l'une quelconque des revendications 9 à 13,
**caractérisé en ce que**
l'étrier (4) en forme de U est réalisé en deux parties, les deux parties étant reliées l'une à l'autre par une articulation tournante pouvant être bloquée par enclenchement, en particulier pouvant être bloquée par enclenchement à plusieurs reprises.

15. Système de retenue de manège selon l'une quelconque des revendications 1 à 8,
**caractérisé en ce que**
l'élément de fermeture comprend un étrier rigide en forme de U, de préférence avec un rembourrage qui est reçu au niveau de l'une de ses extrémités par le biais d'une tringlerie dans une coulisse de sorte que l'étrier en forme de U modifie sa distance par rapport au siège lors du coulissement et parvient dans une position de retenue, et le verrouillage étant intégré dans la coulisse et/ou un élément d'encliquetage (5) pour l'engagement dans le verrouillage (11) étant prévu au niveau de l'autre extrémité (seconde extrémité) de l'étrier, et l'élément de retenue étant forme par l'étrier et éventuellement le verrouillage au niveau de la seconde extrémité de l'étrier.

16. Système de retenue de manège selon l'une quelconque des revendications 1 à 8,
**caractérisé en ce que**
l'élément de fermeture est formé par un anneau (37) que la personne pose avant de prendre place sur le siège dans la zone du bassin, et qui présente des éléments d'encliquetage (27, 28) pour l'engagement dans un verrouillage disposé en particulier sur le siège, l'élément de retenue en forme de U étant formé par une partie de l'anneau et le verrouillage.

17. Système de retenue de manège selon la revendication 16,
**caractérisé en ce que**
l'anneau (37) présente deux éléments d'encliquetage (27, 28) disposes en particulier symétriquement.

18. Système de retenue de manège selon l'une quelconque des revendications précédentes,
**caractérisé en ce que**
la distance de l'élément de retenue (4) en forme de U au siège (1) respectivement les positions de verrouillage et la longueur de la surface d'assise (3) et/ou le dossier (2) est adaptée l'une à l'autre de sorte qu'une chute de la personne en position de retenue ne soit pas possible.

19. Système de retenue de manège selon l'une quelconque des revendications précédentes,
**caractérisé en ce que**
la surface d'assise (3) et/ou le dossier (2) est adapté aux contours du corps, en particulier ceux-ci sont relevés au niveau des bords.
